# EUROPÄISCHE PATENTSCHRIFT

(11) **EP 1 266 349 B1**
(45) Veröffentlichungstag und Bekanntmachung des Hinweises auf die Patenterteilung: **14.09.2011**
(21) Anmeldenummer: 01929386.9
(22) Anmeldetag: 01.03.2001
(51) Int. Cl.: G06K 15/00

(54) **KONFIGURIERUNG VON GERÄTESPEZIFISCHEN PROGRAMMEN IN EINEM DRUCK- ODER KOPIERGERÄT**
CONFIGURATION OF DEVICE-SPECIFIC PROGRAMS IN A PRINTER OR COPIER
CONFIGURATION DE PROGRAMMES SPECIFIQUES A un APPAREIL DANS UNE IMPRIMANTE OU UNE PHOTOCOPIEUSE

(30) Priorität: 01.03.2000 DE 10009917
(43) Veröffentlichungstag der Anmeldung: 18.12.2002
(73) Patentinhaber: OCE Printing Systems GmbH, 85586 Poing (DE)
(72) Erfinder: BRANDL, Thomas, 84424 Isen (DE)
(74) Vertreter: Schaumburg, Thoenes, Thurn, Landskron, Eckert
(86) Internationale Anmeldenummer: PCT/EP2001/002334
(87) Internationale Veröffentlichungsnummer: WO 2001/065477

(56) Entgegenhaltungen:
- EP-A- 0 886 189
- US-A- 5 045 880
- US-A- 5 638 497

## Beschreibung

Die Erfindung betrifft ein Verfahren zum Konfigurieren von gerätespezifischen Programmen gemäß Anspruch 1.

Bei einem Ladevorgang wird ein gerätespezifisches Programm in einem Hauptspeicher einer Gerätesteuerung zur Ausführung vorbereitet. Ein solcher Vorgang wird allgemein auch als Konfigurieren des gerätespezifischen Programms bezeichnet. Ist das Programm ein Betriebssystem, z.B. das Betriebssystem WINDOWS 95, WINDOWS 98 oder WINDOWS NT, so wird der Ladevorgang auch als Booten bezeichnet. Das Betriebssystem arbeitet als Bindeglied zwischen Anwendungsprogrammen und elektronischen Bauelementen des Rechners und erfüllt zentrale Aufgaben, z.B. die zentrale Speicherverwaltung und die Steuerung der Ein- und Ausgabeeinheiten.

Ein bekanntes mehrere gerätespezifische Programme enthaltendes Programmsystem wird zur Steuerung von Hochleistungsdruckern der Firma "océ Printing Systems GmbH" eingesetzt. Insbesondere gibt es in diesen Druckern eine Baueinheit zur Bearbeitung von Bilddaten, die als SRA-Kontroller bezeichnet wird (Scalable Raster Architecture). Das den SRA-Kontroller steuernde Programmsystem läßt sich für unterschiedliche Einsatzzwecke konfigurieren. Es besteht die Möglichkeit, ein bestimmtes Bussystem aus mehreren verschiedenen Bussystemen durch eine Bedienperson auszuwählen. So gibt es bei den Hochleistungsdruckern Eingabebussysteme für /370er-Rechner der Firma IBM, ein SCSI-Bussystem (Small Computer System Interface), eine Centronics-Schnittstelle sowie andere Bussysteme.

Außerdem kann die Bedienperson zwischen verschiedenen Emulationsarten wählen. Abhängig von der Emulationsart werden die über das Bussystem zum Drucker übertragenen Daten gemäß einer vorgegebenen Druckersprache ausgewertet, z.B. gemäß der Druckersprache PCL (Printer Control Language) oder einer anderen Druckersprache.

Bei neueren Hochleistungsdruckern gibt es außerdem die Möglichkeit, zwischen verschiedenen Werten für die Auflösung des zu druckenden Bildes zu wählen. Die Auflösung legt die Anzahl der zu druckenden Bildelemente pro Längeneinheit fest. Gebräuchlich ist eine Bezugslängeneinheit von 1 Inch (25,4 mm). So kann zwischen einer Auflösung von 600 dpi (dots per Inch), 300 dpi und 240 dpi gewählt werden.

Beim Konfigurieren des gerätespezifischen Programmsystems gibt es Situationen, in denen Einstellwerte auf Standardwerte gesetzt werden, z.B. wenn die Druckersprache gewechselt wird und von der neuen Druckersprache eine bisher verwendete Druckauflösung nicht mehr unterstützt wird. Das Setzen von Standardwerten führt bisher oft zu Fehlbedienungen, da die Bedienperson den Wechsel auf einen Standardwert erst später bemerkt.

Das bisherige Vorgehen ist in mehrfacher Hinsicht nachteilig. Bei jedem Ladevorgang werden die zuletzt gültigen Einstellwerte verwendet. Der Ladevorgang selbst dauert dann oft mehrere Minuten. Muß ein im ersten Ladevorgang verwendeter Einstellwert, z.B. die neue Druckerauflösung, geändert werden, so muß die Bedienperson zum Drucker zurückkehren und einen weiteren Ladevorgang durchführen. Hat eine Bedienperson mehrere Drucker, z.B. zehn Drucker, zu betreuen, so erfordert das Konfigurieren der Drucker bei Schichtbeginn eine erhöhte Aufmerksamkeit, wenn die Bedienperson mehrere Drucker gleichzeitig konfigurieren möchte. Fehlbedienungen verzögern außerdem die Verfügbarkeit des Druck- oder Kopiersystems für das Drucken bzw. Kopieren.

Aus der EP 0 933 693 A2 ist ein Verfahren zum Darstellen der Einstellinformationen von mindestens einer mehrschichtigen Bedienerschnittstelle bekannt, wobei verschiedenartige Funktionen der Bedienerschnittstelle auf einer Anzeigeeinheit eines Computersystems darstellbar sind. Die Einstelldaten sind durch die Bedienperson änderbar. Die geänderten Einstellinformationen werden in einem Speicherbereich gespeichert. Bei einer erneuten Anzeige der Einstellinformationen werden die aktuellen Einstellinformationen aus den gespeicherten Einstellinformationen ermittelt. Die mehrschichtige Bedienerschnittstelle ist Teil eines Druckertreiber-Programmoduls, das mit einer Hilfe einer Datenverarbeitungsanlage, z.B. mit Hilfe eines Personal-Computers abgearbeitet wird. Dieses Programmodul wird auch als Druckertreiber bezeichnet und dient zum Erzeugen von druckerangepaßten Druckdaten in der Datenverarbeitungsanlage, wobei die druckerangepaßten Druckdaten nach dem Erzeugen zum Drucker übertragen werden. Weiterhin ist ein System zum Abarbeiten eines solchen Verfahrens in der europäischen Patentanmeldung EP 0 933 693 A 2 beschrieben.

Aus der WO 97/32274 ist ein offenes Drucksystem beschrieben, bei dem Druckdaten, die von beliebigen Computertypen erzeugt worden sind, automatisch zu verschiedenen Typen von Druckern weitergeleitet werden. Dabei werden Druckaufträge, die Druckdaten enthalten, von einer beliebigen Anzahl von Quellcomputern zu einer beliebigen Anzahl von Druckern automatisch, zum Beispiel mit Hilfe eines Druckservers, verteilt, wobei das Verfahren zum Betreiben des offenen Drucksystems die Überwachung der Abarbeitung der Druckaufträge auf Hochleistungs-Druckeinrichtungen mit Hilfe einer grafischen Bedienschnittstelle einschließt.

Eine Einstellmöglichkeit zum Konfigurieren von gerätespezifischen Programmen direkt am Druck- oder Kopiergerät ist weder aus der EP 0 933 693 A2 noch aus der WO 97/32274 bekannt.

Aus dem Dokument EP 0 814 425 A1 ist eine digitale Kopiervorrichtung bekannt, die in einem lokalen Betriebsmodus und in einem Remote-Betriebsmodus betreibbar ist. Wird ein Druckauftrag über ein Netzwerk empfangen kann dieser Prozess durch ein lokalen Benutzer unterbrochen werden, der beispielsweise am Gerät ein Kopiervorgang ausführen will. Dazu arbeitet eine Gerätesteuerung gerätespezifische Programme ab. Über eine Eingabeeinheit kann eine festgesetzte Priorität für den Druckauftrag über eine geändert werden. Abhängig von der gesetzten Priorität kann dann der Kopiervorgang vor dem Druckvorgang zum Ausführen des Druckauftrags gestartet werden.

Aus dem Dokument US 5,638,497 A ist bekannt, dass ein Benutzer einer Workstation eine erste Druckerkonfiguration und eine zweite Druckerkonfiguration nutzen kann. Dazu verbindet er die erste Druckerkonfiguration mit einer ersten Kommunikationsprotokolladresse. Der Drucker ist dann als erster virtueller Drucker mit einer ersten Voreinstellung konfiguriert. Ferner verbindet der Benutzer die zweite Druckerkonfiguration mit einer zweiten Kommunikationsprotokolladresse. Der Drucker ist dann als zweiter virtueller Drucker mit einer zweiten Voreinstellung konfiguriert. Dadurch kann der Nutzer einfach über die virtuellen Drucker verschiedene Voreinstellungskonfigurationen bzw. Druckerkonfigurationen nutzen.

Dokument US-A-5 045 880 offenbart ein Verfahren zur Vorprogrammierung eines Druck- oder Kopiergeräts. Laut diesem Verfahren werden die Druck- oder Kopiereinstellungen bei der Bedienperson noch während das Gerät im Prozess der Ausführung eines früheren Jobs ist geändert, wobei das Gerät auf einem Bildschirm die gespeicherten Einstellungen zeigt, die durch Berühren des Bildschirms bei der Bedienperson für den nächsten Druck- oder Kopier-Jobs geändert werden können. Die Einstellungen werden automatisch gespeichert und nach Abschluss des aktuellen Jobs für den nächsten Job verwendet.

Es ist Aufgabe der Erfindung, zum Konfigurieren von gerätespezifischen Programmen in einem Druck- oder Kopiergerät ein einfaches Verfahren vorzugeben, das die Bedienperson entlastet. Außerdem sollen ein zugehöriges Programm, eine zugehörige Gerätesteuerung sowie ein Druck- oder Kopiergerät mit dieser Gerätesteuerung angegeben werden.

Diese Aufgabe wird durch ein Verfahren mit den im Patentanspruch 1 angegebenen Verfahrensschritten gelöst. Weiterbildungen sind in den Unteransprüchen angegeben.

Beim erfindungsgemäßen Verfahren wird in einem ersten Ladevorgang ein Betriebssystem einer Gerätesteuerung des Druck- oder Kopiergerätes geladen und abgespeichert. Im Speicher der Gerätesteuerung wird mindestens ein ursprünglicher Einstellwert für einen zweiten Ladevorgang gespeichert. Vor oder während der Durchführung des zweiten Ladevorgangs wird der gespeicherte ursprüngliche Einstellwert ausgegeben, z.B. auf eine Anzeigeeinheit des Druck- oder Kopiergerätes. Der ursprüngliche Einstellwert ist durch eine Bedienperson änderbar. Ein geänderter Einstellwert wird für den zweiten Ladevorgang gespeichert. Während des zweiten Ladevorgangs wird dann entweder der geänderte Einstellwert verwendet, falls eine Änderung erfolgt ist, oder es wird der ursprünglich gespeicherte Einstellwert verwendet, falls keine Änderung erfolgt ist. Beim zweiten Ladevorgang wird mindestens ein gerätespezifisches Programm in einer Speichereinheit unter Verwendung des Einstellwertes zur Ausführung geladen.

Das automatische Anzeigen der gespeicherten Einstellwerte vor oder während der Durchführung des zweiten Ladevorgangs führt dazu, daß eine Bedienperson frühzeitig über den späteren Zustand der gerätespezifischen Programme unterrichtet wird. Entschließt sich die Bedienperson dazu, die Einstellwerte zu ändern, so kann frühzeitig in den Ladevorgang eingegriffen werden.

Bei einer Weiterbildung der erfindungsgemäßen Verfahren enthält das Programmsystem Befehle zur Steuerung eines Druck- oder Kopiergerätes, insbesondere eines Hochleistungs-Druck- oder Kopiergerätes. Bei einem Druckvorgang müssen eine Vielzahl von Baueinheiten zusammenwirken, die durch das gerätespezifische Programmsystem gesteuert werden. Das Zusammenwirken der Baugruppen führt zu einer Verflechtung der gerätespezifischen Programmbausteine zum Ansteuern der einzelnen Baueinheiten. So sind Prüfschritte erforderlich, die gewährleisten, daß beim Einschalten des Druck- oder Kopiergerätes durch falsch vorgegebene Parameter keine Fehlfunktionen auftreten, die einen Druckvorgang verhindern. Auf ähnliche Art ergeben sich komplexe Zusammenhänge bei der Wahl der oben genannten Einstellwerte, d.h. der Einstellwerte für das aktive Bussystem, für die Druckersprache und die Auflösung. Das Zusammenwirken der Baueinheiten erschwert das Einstellen von verschiedenen Einstellwerten in einem einzigen Ladevorgang. Deshalb sind insbesondere bei Druck- oder Kopiergeräten und insbesondere bei den komplex aufgebauten Hochleistungsdruckern oft mehrere Ladevorgänge erforderlich.

Die Einstellmöglichkeiten betreffen bei einer Ausgestaltung die Vorgabe eines Bussystems zur Eingabe von Druckdaten, die Vorgabe einer Druckersprache und/oder die Vorgabe der Bildauflösung des zu druckenden Bildes. Für jede Einstellmöglichkeit wird eine Auswahl aus vorgegebenen Einstellmöglichkeiten getroffen. Die genannten Einstellmöglichkeiten sind Einstellmöglichkeiten, die bei bestimmten Kombinationen mehrere neue Ladevorgänge erfordern. Es gibt dagegen auch Einstellmöglichkeiten, die ohne erneuten Ladevorgang durchgeführt werden können, beispielsweise bei Druck- oder Kopiergeräten die Einstellung des Blattformates, oder die Ausrichtung des Druckbildes auf dem Blatt. Solche Einstellungsmöglichkeiten werden auch beim Einsatz des erfindungsgemäßen Verfahrens wie bisher gemeinsam für den jeweiligen Druck- oder Kopierauftrag vorgegeben.

Bei einer Weiterbildung steuert das gerätespezifische Programmsystem eine erste Gerätesteuerung. Die Einstellmöglichkeiten werden beim Betrieb einer zweiten Gerätesteuerung vorgegeben und zumindest der zweite Einstellwert wird in der zweiten Gerätesteuerung gespeichert. Die zweite Gerätesteuerung überträgt die Einstellwerte über eine Datenübertragungsverbindung zur ersten Gerätesteuerung. Der erste Einstellwert wird unmittelbar nach seiner Eingabe oder erst nach der Eingabe auch des zweiten Einstellwertes zur Gerätesteuerung übertragen. Die Datenübertragungsverbindung ist bei einer Ausführungsform ein Bussystem innerhalb eines Gerätes. Bei anderen Ausführungsformen wird ein lokales Netzwerk, das beispielsweise auf einen Betrieb begrenzt ist. Durch das Verwenden zweier Gerätesteuerungen lassen sich die Vorteile der Modularisierung nutzen. So können beide Gerätesteuerungen gleichzeitig durch Betätigen eines Hauptschalters eingeschaltet werden. Sobald die zweite Gerätesteuerung betriebsbereit ist, können die Einstellwerte eingegeben werden. Es braucht nicht gewartet zu werden, bis auch die erste Gerätesteuerung betriebsbereit ist. Durch ein Kommunikationsprogramm wird die Datenübertragung zwischen beiden Gerätesteuerungen so gesteuert, daß keine Datenverluste auftreten.

Bei einer Ausgestaltung ist die zweite Gerätesteuerung ein Bedienrechner zum Steuern eines Bedienfeldes zum Eingeben und/oder Anzeigen von Druckparametern für den Druckvorgang in einem Druck- oder Kopiergerät, insbesondere in einem Hochleistungsdruck- oder Kopiergerät. In diesem Fall ist die zweite Gerätesteuerung nach dem Einschalten im Vergleich zur ersten Gerätesteuerung eher betriebsbereit, weil nur ein vergleichsweise kleines Betriebssystem benötigt wird. Eine Bedienperson kann über das Bedienfeld kurz nach dem Einschalten des Druck- oder Kopiergerätes Parameter prüfen und gegebenenfalls ändern.

Bei einer nächsten Ausgestaltung enthalten die Ladevorgänge das Vorbereiten von sogenannten Prozessen bzw. sogenannte Threads. Mehrere Prozesse werden beim Ausführen der Befehle desselben Programmbausteins durchgeführt. Jedem Prozeß ist jedoch ein anderer Bereich zur Speicherung prozeßspezifischer Daten im Hauptspeicher zugeordnet. Ein Prozeß kann mehrere Threads enthalten, denen jeweils ein eigener Programmzähler, ein eigener Stapelspeicher und gegebenenfalls auch ein eigener Registersatz des die Befehle ausführenden Prozessors zugeordnet sind. Der Ladevorgang eines Programmbausteins enthält bei dieser Weiterbildung insbesondere Schritte zur Vorbereitung der Ausführung des Prozesses oder des Threads.

Das erfindungsgemäße Verfahren läßt sich so abwandeln, daß nach dem Einschalten der durch das Programmsystem gesteuerten Gerätesteuerung auf eine Anzeigeeinheit mindestens ein aktuell gültiger Einstellwert angezeigt wird. Vor dem Beginn eines Ladevorgangs mit dem angezeigten Einstellwert kann ein anderer Einstellwert eingegeben werden. Durch diese Maßnahmen hat eine Bedienperson die Möglichkeit, den beim Einschalten gültigen Einstellwert zu prüfen und gegebenenfalls zu verändern, ohne daß erst das Ende eines Ladevorgangs abgewartet werden muß, der später dann möglicherweise nochmals mit geändertem Einstellwert wiederholt werden muß.

Bei einer alternativen Ausgestaltung wird das erfindungsgemäße Verfahren so abgewandelt, daß der Ladevorgang mit den aktuell gültigen Einstellwerten nach dem Einschalten der Gerätesteuerung automatisch gestartet wird. Der Ladevorgang kann zum Eingeben eines anderen Einstellwertes unterbrochen werden. Der Ladevorgang mit den aktuell gültigen Einstellwerten wird somit vorsorglich gestartet und gegebenenfalls abgebrochen, wenn ein anderer Einstellwert verwendet werden soll. Soll kein anderer Einstellwert eingegeben werden, so wird der Ladevorgang ausgeführt, ohne daß eine Verzögerung durch die Entscheidung der Bedienperson auftritt. Bei einer Ausgestaltung ist die Unterbrechung des vorsorglich gestarteten Ladevorgangs nur innerhalb einer vorgegebenen Zeitspanne möglich.

Die Erfindung betrifft außerdem ein gerätespezifisches Programm, einen Datenträger und eine Gerätesteuerung zum Durchführen des erfindungsgemäßen Verfahrens. Die erfindungsgemäße Gerätesteuerung hat eine Speichereinheit, in der mindestens ein Einstellwert vor dem Durchführen des zugehörigen Ladevorgangs gespeichert wird. Durch eine Steuereinheit der Gerätesteuerung wird nach dem Ausführen eines ersten Ladevorgangs mit dem einen Einstellwert dem gerätespezifischen Programmsystem der andere Einstellwert zum Ausführen eines zweiten Ladevorgangs übergeben. Somit gelten die oben für das Verfahren genannten Wirkungen auch für die Gerätesteuerung. Bei Ausgestaltungen ist die Gerätesteuerung so aufgebaut, daß auch die Weiterbildungen des erfindungsgemäßen Verfahrens ausgeführt werden.

Weiterhin betrifft die Erfindung ein Druck- oder Kopiergerät, insbesondere ein Hochleistungsdruckgerät oder ein Hochleistungskopiergerät, die eine erfindungsgemäße Gerätesteuerung enthalten. Das erfindungsgemäße Druck- oder Kopiergerät zeichnet sich durch einen hohen Bedienkomfort aus. Eine Bedienperson, die mehrere erfindungsgemäße Druck- oder Kopiergeräte bedienen muß, wird beim Konfigurieren der Druck- oder Kopiergeräte nicht übermäßig belastet, weil sämtliche Einstellwerte für die Druckvorgänge an den Druck- oder Kopiergeräten jeweils ohne Unterbrechung in einem Arbeitsvorgang eingegeben werden können.

Im folgenden werden Ausführungsbeispiele der Erfindung an Hand der beiliegenden Zeichnungen erläutert. Darin zeigen:
- Figur 1: Baugruppen in einem Hochleistungs-Druck- oder Kopiergerät,
- Figur 2: Vorgänge in den Baugruppen während des Ein- schaltvorgangs,
- Figur 3: während des Einschaltvorgangs angezeigte Aus- wahlfelder, und
- Figur 4: eine Auswahlliste zum Auswählen einer Drucker- sprache.

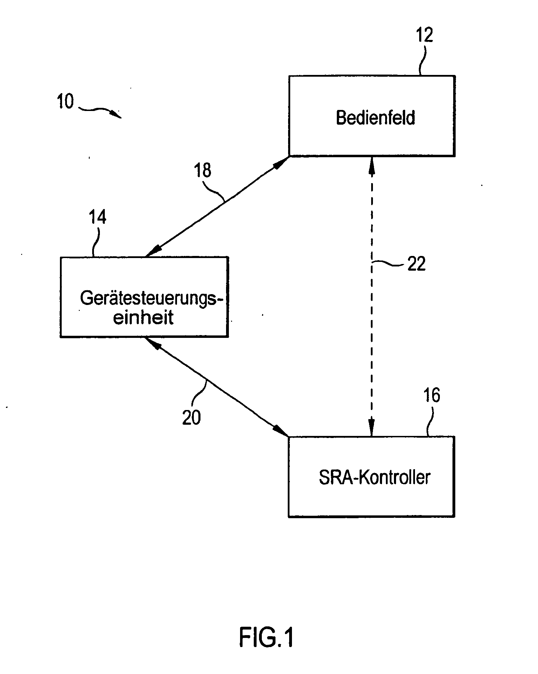

Figur 1 zeigt drei Baugruppen in einem Hochleistungs-Druck- oder Kopiergerät 10, nämlich ein Bedienfeld 12, eine Gerätesteuerung 14 und einen SRA-Kontroller 16 (Scalable Raster Architecture). Das Bedienfeld 12 ist ein marktüblicher Personalcomputer mit einem Prozessor, einem Hauptspeicher, einer Eingabetastatur und einer Anzeigeeinheit, z.B. einem Bildschirm. Als Betriebssystem wird beispielsweise das Betriebssystem WINDOWS 98 verwendet. Das Bedienfeld 12 dient zur Eingabe und zum Anzeigen von Druckparametern für die vom Druck- oder Kopiergerät 10 auszuführenden Druckvorgänge. Der Aufbau des Bedienfeldes 12 ist beispielsweise vom Hochleistungs-drucker PAGESTREAM 145 der Firma océ Printing Systems GmbH bekannt.

Die Gerätesteuerungseinheit 14 enthält einen Steuerrechner zum Steuern der Druckeinheiten des Druck- oder Kopiergerätes 10. Zu diesen Druckeinheiten gehört eine Belichtungseinheit zum selektiven Belichten eines Fotoleiters, eine Entwicklereinheit zum Entwickeln eines Tonerbildes auf dem Fotoleiter, eine Übertragungseinheit zum Übertragen des Tonerbildes auf einen Druckbildträger, z.B. Papier, eine Fixiereinheit zum Fixieren des Tonerbildes sowie weitere Hilfseinheiten. Die Einheiten sind in Figur 1 nicht dargestellt, da sie den Einheiten bekannter Druck- oder Kopiergeräte entsprechen, z.B. den Einheiten in dem Hochleistungsdrucker PAGESTREAM 158 der Firma OCÉ Printing Systems GmbH.

Der Kontroller 16 dient zum Bearbeiten von zu drucken Druckdaten. Im Kontroller 16 sind neun parallel arbeitende Prozessoren enthalten, die beispielsweise eine Skalierung des Druckbildes ausführen. Als Betriebssystem wird im Kontroller 16 das Betriebssystem WINDOWS NT genutzt. Die Funktion des Kontrollers 16 entspricht der des im Drucker PAGESTREAM 158 eingesetzten Kontrollers.

Eine Datenübertragungsverbindung 18 zwischen Bedienfeld 12 und Gerätesteuerungseinheit 14 sowie eine Datenübertragungsverbindung 20 zwischen Gerätesteuerungseinheit 14 und SRA-Kontroller dienen zur Übertragung von Steuerbefehlen zwischen den Baugruppen 12 bis 16. Bei einem alternativen Ausführungsbeispiel wird eine Datenübertragungsverbindung 22 verwendet, die zwischen Bedienfeld 12 und Kontroller 16 liegt.

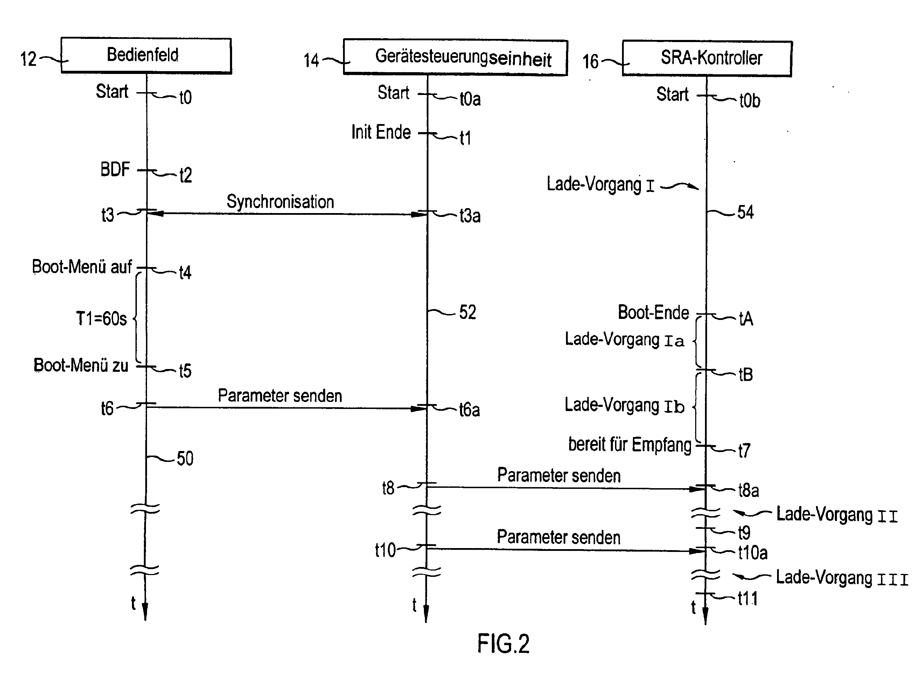

Figur 2 zeigt Vorgänge im Bedienfeld 12, in der Gerätesteuerungseinheit 14 und im Kontroller 16 während des Einschaltvorgangs des Druckers 10, siehe Figur 1. Dem Bedienfeld 12, der Gerätesteuerungseinheit 14 und dem Kontroller 16 sind in dieser Reihenfolge Zeitachsen 50, 52 und 54 zugeordnet, auf denen Vorgänge in der jeweiligen Baueinheit abhängig von der Zeit t dargestellt werden. Spätere Zeitpunkte sind auf den Zeitachsen 50, 52 und 54 weiter unten dargestellt als früherliegende Zeitpunkte. Zeitpunkte, die gleichzeitig stattfinden, liegen auf einer Geraden, die rechtwinklig zu den parallel liegenden Zeitachsen 50, 52 und 54 liegt. Zu einem Zeitpunkt t0 wird das Druck- oder Kopiergerät 10 eingeschaltet, d.h. mit dem Stromversorgungsnetz verbunden. Dem Zeitpunkt t0 auf der Zeitachse 50 entspricht ein Zeitpunkt t0a bzw. t0b auf der Zeitachse 52 bzw. 54. Im Bedienfeld 12, in der Gerätesteuerungseinheit 14 und im Kontroller 16 wird zum Zeitpunkt t0 gleichzeitig mit Ladevorgängen begonnen. Im Bedienfeld 12 wird das Betriebssystem WINDOWS 98 von einer nichtflüchtigen Speichereinheit, z.B. einer Festplatte, in einen flüchtigen Hauptspeicher kopiert. In der Gerätesteuerungseinheit 14 befindet sich eine spezielle Art Steuerprogramm in einem nichtflüchtigen Speicher (ROM-Read Only Memory). Deshalb ist der Ladevorgang in der Gerätesteuerungseinheit 14 nach nur wenigen Sekunden zu einem Zeitpunkt t1 beendet. Der Ladevorgang im Bedienfeld 12 dauert länger als der Ladevorgang in der Gerätesteuerungseinheit 14 und ist zu einem Zeitpunkt t2 beendet.

Im Kontroller 16 müssen das Betriebssystem WINDOWS NT gebootet sowie Anwenderprogramme vorbereitet werden, siehe Lade-Vorgang I. Dieser Vorgang dauert länger als zwei Minuten. Während dieser Zeitspanne werden im Bedienfeld und in der Gerätesteuerungseinheit 14 schon die im folgenden erläuterten Vorgänge ausgeführt.

Zu einem Zeitpunkt t3, dem ein Zeitpunkt t3a auf der Zeitachse 52 entspricht, tauschen das Bedienfeld 12 und die Gerätesteuerungseinheit 14 Befehle zur Synchronisation über die Datenübertragungsverbindung 18 aus. Nach dem Synchronisationsvorgang können Daten vom Bedienfeld 12 zur Gerätesteuerungseinheit 14 und in umgekehrter Richtung gesendet werden.

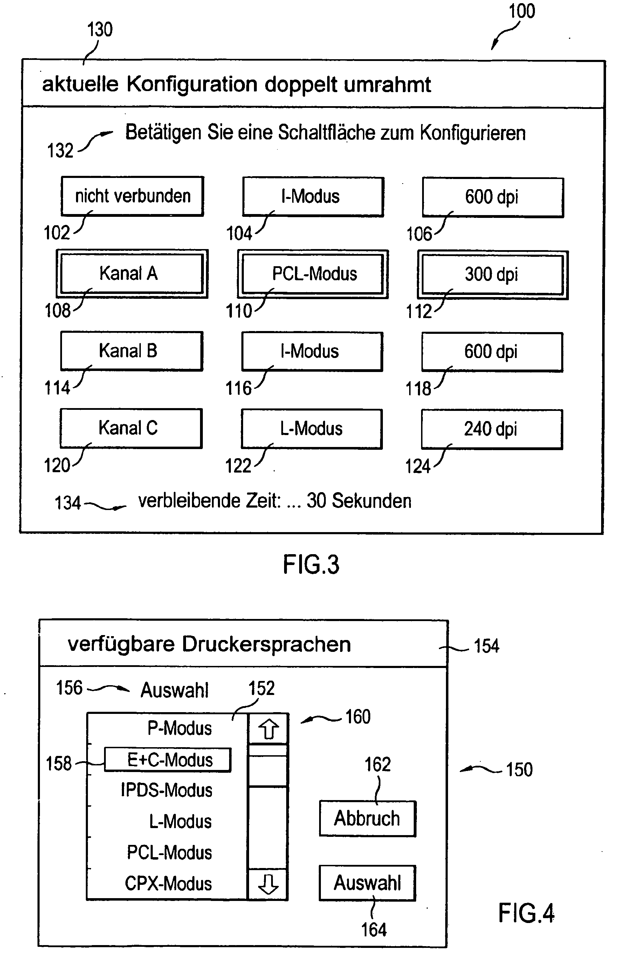

Zu einem Zeitpunkt t4 werden auf der Anzeigeeinheit des Bedienfeldes 12 Auswahlfelder dargestellt. Die Auswahlfelder werden in einem Boot-Menü dargestellt. An Hand der Figur 3 werden die Auswahlfelder für die Auswahl eines Kanals einer Druckersprache und einer Auflösung weiter unten erläutert. Die Auswahlfelder werden auf einer Anzeigeeinheit des Bedienfeldes 12 für eine Zeitspanne T1 von sechzig Sekunden angezeigt. Während dieser sechzig Sekunden hat die Bedienperson des Druck- oder Kopiergerätes 10 die Möglichkeit, die Auswahlfelder zu betätigen, um Einstellwerte für den Druckvorgang zu ändern. Erfolgt während der sechzig Sekunden keine Eingabe, so werden die Anzeigefelder nach Ablauf der Zeitspanne T1 nicht mehr auf der Anzeigeeinheit dargestellt, d.h. das Boot-Menü wird geschlossen, siehe Zeitpunkt t5. Betätigt die Bedienperson während der sechzig Sekunden ein Auswahlfeld, so wird die ausgewählte Einstellung nach Ablauf der sechzig Sekunden gespeichert. Danach werden die Auswahlfelder nicht mehr während der Vorbereitung des Druck- oder Kopiergerätes angezeigt.

Zu einem Zeitpunkt t6, dem ein Zeitpunkt t6a auf der Zeitachse 52 entspricht, werden vom Bedienfeld 12 die im Boot-Menü eingestellten Parameter für den ausgewählten Kanal, die gewählte Druckersprache und die gewählte Auflösung an die Gerätesteuerungseinheit 14 gesendet. Die Gerätesteuerungseinheit 14 wartet, bis der Ladevorgang I im Kontroller 16 zu einem Zeitpunkt t7 beendet ist.

Zwischen den Zeitpunkten t0b und t7 wurde im Kontroller 16 zunächst das Betriebssystem WINDOWS NT gebootet. Das Boot-Ende wurde zu einem Zeitpunkt tA erreicht. Danach wurde in einem Lade-Vorgang Ia ausgeführt, bei dem mit den beim Ausschalten des Druck- oder Kopiergerätes vorhandenen Parameter ein gerätespezifisches Anwendungsprogramm zur Ansteuerung des Kanals bzw. Bussystems zur Ausführung vorbereitet wird. Der Lade-Vorgang Ia wird zu einem Zeitpunkt tB beendet. Anschließend wird in einem Lade-Vorgang Ib die Ausführung eines Programms zur Emulation derjenigen Druckersprache vorbereitet, die beim Ausschalten des Druck- oder Kopiergerätes 10 verwendet worden ist.

Zu einem folgenden Zeitpunkt t8, dem ein Zeitpunkt t8a auf der Zeitachse 54 entspricht, wird von der Gerätesteuerungseinheit 14 an den Kontroller 16 über die Datenübertragungsverbindung 20 ein eine Kanalauswahl betreffender Parameter gesendet. Nach dem Empfang dieses Parameters im Kontroller 16 stellt der Kontroller 16 die Abweichung der Parameter fest und führt bis zu einem Zeitpunkt t9 einen Ladevorgang II durch, bei dem im Hauptspeicher des Kontrollers 16 die Ausführung eines Prozesses vorbereitet wird, mit dessen Hilfe Daten über den ausgewählten Kanal bzw. Bus an das Druck- oder Kopiergerät 10 gesendet werden können. Der Ladevorgang II dauert mehrere Minuten. Zur besseren Darstellung wurden in Figur 2 die Zeitachsen 50, 52 und 54 während des Boot-Vorgangs II verkürzt dargestellt.

Zu einem folgenden Zeitpunkt t10, dem ein Zeitpunkt t10a auf der Zeitachse 54 entspricht, wird von der Gerätesteuerungseinheit 14 der die Druckersprache betreffende Parameter an den Kontroller 16 gesendet. Nach Empfang dieses Parameters wird im Kontroller 16 die Abweichung zum beim Lade-Vorgang Ib verwendeten Parameter festgestellt und ein Ladevorgang III gestartet, bei dem ein Prozeß vorbereitet wird, mit dessen Hilfe Daten der ausgewählten Druckersprache bearbeitet werden können. Der Ladevorgang III liegt zwischen dem Zeitpunkt t10a und einem Zeitpunkt t11.

Im Ausführungsbeispiel sei angenommen, daß der Parameter für die Auflösung mit dem beim Ausschalten des Druck- oder Kopiergerätes verwendeten Parameter für die Auflösung übereinstimmt. Deshalb ist dieser Parameter schon beim ersten Ladevorgang I zwischen den Zeitpunkten t0b und t7 im Kontroller 16 berücksichtigt worden. Der Parameter für die Auflösung braucht nicht von der Gerätesteuerungseinheit 14 zum Kontroller 16 übertragen werden.

Nach Ablauf der Zeitspanne für das Aufwärmen der Fixierstation, die beispielsweise bei vier Minuten liegt, oder falls die Ladevorgänge I bis III länger dauern nach dem Beenden aller Ladevorgänge I bis III, ist das Druck- oder Kopiergerät 10 druckbereit.

Die in Figur 2 gezeigten Zeiten sind nur Beispiele. Auch bei anderen Zeiten ergeben sich durch den Einsatz der erfindungsgemäßen Verfahren Vorteile. Werden die Parameter von der Gerätesteuerungseinheit 14 zum SRA-Kontroller 16 bereits vor oder während der Lade-Vorgänge Ia und Ib gesendet, so lassen sich diese Lade-Vorgänge bereits mit den neuen Parametern starten bzw. können vorzeitig abgebrochen werden, um dann erneut mit den neuen Parametern gestartet zu werden.

Figur 3 zeigt ein Boot-Menü 100 mit Auswahlfeldern 102 bis 124, deren Bedeutung unten noch erläutert wird. Eine Titelzeile 130 enthält einen Hinweis darauf, daß die aktuelle Konfiguration durch eine doppelte Umrahmung gekennzeichnet ist, wie es bei den Auswahlfeldern 108, 110 und 112 der Fall ist. In der Praxis wird keine Umrahmung verwendet, sondern die aktuelle Konfiguration wird beispielsweise mit einer sich von der Hinterlegung der anderen Konfigurationen abhebenden Farbe unterlegt. In einer Hinweiszeile 132 wird die Bedienperson aufgefordert, eine der Schaltflächen 102 bis 124 zu betätigen. Eine weitere Hinweiszeile 134 dient der Darstellung der zum Treffen einer Auswahl verbleibenden Zeit. Die Zeitangabe in der Hinweiszeile 134 wird im Sekundentakt aktualisiert.

Die linke Spalte mit den Auswahlfeldern 102, 108, 114 und 120 dient zur Auswahl eines bestimmten Kanals für die Eingabe der zu druckenden Daten. Bei Auswahl des Auswahlfeldes 102 ist das Druck- oder Kopiergerät nicht mit einem Druckserver verbunden. Das Auswahlfeld 108 ist einem Kanal A zugeordnet, der ein Bussystem bezeichnet, wie es in einem Großrechner /370 der Firma IBM verwendet wird. Das Auswahlfeld 114 ist einem Kanal B zugeordnet, hinter dem sich eine SCSI-Schnittstelle verbirgt. Ein Kanal C des Auswahlfeldes 120 betrifft eine Centronics-Schnittstelle. Wählt eine Bedienperson innerhalb der Zeitspanne T1 eine der Schaltflächen 102, 108, 114 bzw. 120 mit Hilfe eines über die Anzeigeeinheit gelegten Berührungssensors aus, sogenannter Touch-Screen, so wird das ausgewählte Auswahlfeld 102, 108, 114 bzw. 120 doppelt umrahmt. Das zuvor umrahmte Auswahlfeld wird mit einfacher Umrahmung dargestellt. Gleichzeitig werden die beiden rechts neben dem ausgewählten Auswahlfeld 102, 108, 114 bzw. 120 liegenden Auswahlfelder doppelt umrahmt dargestellt, z.B. im Fall einer Auswahl des Auswahlfeldes 108 die Auswahlfelder 110 und 112.

Die aus den Auswahlfeldern 104, 110, 116 und 122 bestehende mittlere Spalte dient zur Auswahl eines Emulationsmodus. Die zur Verfügung stehenden Emulationsmodi werden unten an Hand der Figur 4 noch näher erläutert. Das Auswahlfeld 104 ist momentan einem I-Modus (Intelligent Mode) zugeordnet. Das Auswahlfeld 110 ist dem PCL-Modus zugeordnet, bei dem die Druckdaten gemäß der Druckersprache Printer Command Language der Firma HP bearbeitet werden. Das Datenfeld 116 ist aktuell ebenfalls dem I-Modus zugeordnet. Ein L-Modus (Line Mode) ist dem Auswahlfeld 122 zugeordnet. Beim Betätigen eines Auswahlfeldes 104, 110, 116 bzw. 122 wird das ausgewählte Auswahlfeld sowie die links und rechts neben diesem Auswahlfeld liegenden Auswahlfelder doppelt umrahmt dargestellt. Außerdem erscheint eine Liste mit Auswahlmöglichkeiten, siehe Figur 4. Der gemäß Liste ausgewählte Emulationsmodus wird dann als Wert für das betreffende Auswahlfeld 104, 110, 116 bzw. 122 übernommen.

Die Auswahlfelder 106, 112, 118 und 124 der rechten Spalte des Boot-Menüs 100 dienen zur Auswahl der Bildauflösung des zu druckenden Druckbildes. Zur Verfügung stehen abhängig vom ausgewählten Kanal A, B bzw. C verschiedene Auflösungen, z.B. 600 dpi, 300 dpi oder 240 dpi. Beim Betätigen einer der Schaltflächen 106, 112, 118 oder 124 wird die entsprechende Schaltfläche doppelt umrahmt dargestellt. Außerdem erscheint eine Auswahlliste, aus der eine der zur Verfügung stehenden Bildauflösungen ausgewählt werden kann. Die ausgewählte Auflösung wird dann dem doppelt umrahmt dargestellten Datenfeld zugeordnet. Beim Betätigen einer der Schaltflächen 106, 112, 118 bzw. 124 werden außerdem die beiden links daneben liegenden Schaltflächen ebenfalls doppelt umrahmt dargestellt.

Nach Ablauf der sechzig Sekunden werden dann die den doppelt umrahmt dargestellten Auswahlfeldern zugeordneten Parameter für den Start des Druckers 10 verwendet.

Das Darstellen des Boot-Menüs 100 läßt sich über ein Benutzermenü unterdrücken. Somit kann die Bedienperson entscheiden, ob das Boot-Menü 100 dargestellt werden soll oder nicht.

Nach Beendigen des ersten Boot-Vorgangs des Druck- oder Kopiersystems wird im Bedienfeld 12 eine Datenbank aufgebaut, die Informationen über die vorhandenen Kanalbaugruppen, die zulässigen Emulationen und die zulässigen Druckauflösungen enthält. Diese Daten werden vom Kontroller 16 über die Gerätesteuerung 14 an das Bedienfeld 12 gesendet und dort gespeichert. Nach jedem weiteren Einschaltvorgang wird bei der Ausführung der Programme des Bedienfeldes 12 geprüft, welches die aktuelle Konfiguration ist. Abhängig von der aktuellen Konfiguration wird die Datenbank aktualisiert. Die erste Zeile mit den Auswahlfeldern 102, 104 und 106 wird von einem Wartungstechniker beispielsweise dann ausgewählt, wenn eine andere Kanalschnittstelle in das Druck- oder Kopiergerät 10 eingebaut worden ist, weil die Datenbank im Bedienfeld 12 erst nach Boot-Ende des Kontrollers 16 mit dem Parameter zur Auswahl der neu eingebauten Kanalschnittstelle ergänzt wird.

Figur 4 zeigt ein Fenster 150 mit einer Auswahlliste 152 zur Auswahl eines Emulationsmodus. Eine Titelzeile 154 weist die Bedienperson darauf hin, daß im Fenster 150 Codes für verschiedene Druckermodi angezeigt werden. Eine Hinweiszeile 156 enthält das Wort "Auswahl" zur Bezeichnung der Auswahlliste 152. In der Auswahlliste 152 sind verschiedene Auswahlmodi aufgelistet, unter anderem P-Modus, E+C-Modus, PCL-Modus. Die momentan geltende Auswahl wird durch einen einfachen Rahmen 158 umrahmt. Mit Hilfe einer vertikalen Bildlaufleiste 160 lassen sich weitere Auswahlmöglichkeiten in der Auswahlliste 152 anzeigen. Die Auswahl läßt sich mit Hilfe einer Schaltfläche 162 abbrechen. Eine Schaltfläche 164 dient zur Bestätigung der Auswahl. Nach dem Betätigen der Schaltfläche 162 oder der Schaltfläche 164 erscheint wieder das Boot-Menü. Nach Ablauf der sechzig Sekunden wird bei geöffnetem Fenster 150 der momentan umrahmte Eintrag der Auswahlliste für den Boot-Vorgang verwendet. Bei einer alternativen Ausführungsform verzögert ein geöffnetes Fenster 150 das Schließen des Boot-Menüs 100.

Das erfindungsgemäße Verfahren läßt sich jedoch nicht nur in Druck- oder Kopiergeräten vorteilhaft einsetzen, sondern kann auch in sogenannten Hybridgeräten eingesetzt werden. Die Hybridgeräte vereinen, neben Druck-und/oder Kopierfunktionen, die Funktionen mehrerer Geräte, wie z.B. E-mail- und/oder Fascimilefunktionen.

### Bezugszeichenliste

- 10: Hochleistungs-Druck- oder Kopiergerät
- 12: Bedienfeld
- 14: Gerätesteuerung
- 16.: SRA-Kontroller
- 18, 20, 22: Datenübertragungsverbindung
- 50, 52, 54: Zeitachse
- t0, t0a, t0b: Zeitpunkt
- t1, t2: Zeitpunkt
- t3, t3a: Zeitpunkt
- t6, t6a: Zeitpunkt
- t7: Zeitpunkt
- t8, t8a: Zeitpunkt
- t9: Zeitpunkt
- t10, t10a: Zeitpunkt
- t11: Zeitpunkt
- tA, tB: Zeitpunkt
- t: Zeit
- 100: Boot-Menü
- 102 bis 124: Auswahlfeld
- 130: Titelzeile
- 132, 134: Hinweiszeile
- 150: Fenster
- 152: Auswahlliste
- 154: Titelzeile
- 156: Hinweiszeile
- 158: Rahmen
- 160: vertikale Bildlaufleiste
- 162: Schaltfläche
- 164: Schaltfläche
- I, II, III: Lade-Vorgang
- Ia, Ib: Lade-Vorgang

## Patentansprüche

1. Verfahren zum Konfigurieren von gerätespezifischen Programmen in einem Druck- oder Kopiergerät, wobei
bei dem Verfahren nach dem Einschalten des Druck- oder Kopiergerätes (10) in einem ersten Ladevorgang ein Betriebssystem durch eine Gerätesteuerung (16) des Druck- oder Kopiergerätes (10) geladen wird, und wobei
bei dem Verfahren mit Hilfe der Gerätesteuerung (16) des Druck- oder Kopiergerätes (10) mindestens ein gerätespezifisches Programm abgearbeitet wird,
wobei mindestens ein Einstellwert (102 bis 124) für einen nach dem Beenden des ersten Ladevorgangs
auszuführenden zweiten Ladevorgang (Ia, Ib, II, III) zum Laden des gerätespezifischen Programms in einen Speicherbereich der Gerätesteuerung (16) als ursprünglicher Einstellwert (102 bis 124) gespeichert ist,
**dadurch gekennzeichnet, dass** während der Durchführung des ersten Ladevorgangs automatisch der gespeicherte Einstellwert (102 bis 124) auf einer Anzeigeeinheit des Druck- oder Kopiergerätes (10) ausgegeben wird,
dass der ausgegebene Einstellwert (102 bis 124) mit Hilfe einer Eingabeeinheit des Druck- oder Kopiergerätes (10) änderbar ist,
dass bei einer Änderung des ausgegebenen Einstellwertes (102 bis 124) der geänderte Einstellwert (102 bis 124) für den zweiten Ladevorgang (Ia, Ib, II, III) gespeichert wird,
dass bei dem zweiten Ladevorgang (II, III) das gerätespezifische Programm unter Verwendung des geänderten Einstellwertes (102 bis 124) geladen wird, wenn eine Änderung des ursprünglichen Einstellwertes (102 bis 124) erfolgt ist,
und dass beim zweiten Ladevorgang (Ia, Ib) das gerätespezifische Programm unter Verwendung des ursprünglichen Einstellwertes (102 bis 124) geladen wird, wenn keine Änderung des ursprünglichen Einstellwertes erfolgt ist.

2. Verfahren nach Anspruch 1, **dadurch gekennzeichnet daß** der zweite Ladevorgang (Ia, Ib) zum Laden des gerätespezifischen Programms automatisch gestartet wird während der gespeicherte Einstellwert (104, 110, 116, 122) noch änderbar ist.

3. Verfahren nach Anspruch 2, **dadurch gekennzeichnet, daß** ein mit dem ursprünglichen Einstellwert (102 bis 124) bereits begonnener zweiter Ladevorgang (Ia, Ib) ohne Unterbrechung beendet oder unterbrochen wird, wenn der geänderte Einstellwert (102 bis 104) erst nach dem Beginn des zweiten Ladevorgangs (Ia, Ib) gespeichert wird,
und daß der zweite Ladevorgang (II, III) mit dem geänderten Einstellwert (102 bis 124) automatisch nochmals gestartet wird.

4. Verfahren nach einem der vorhergehenden Ansprüche, **dadurch gekennzeichnet, daß** das gerätespezifische Programm Befehle zur Steuerung eines Druck- oder Kopiergerätes (10) enthält, insbesondere eines Hochleistungs-Druckgerätes oder eines Hochleistungs-Kopiergerätes.

5. Verfahren nach einem der vorhergehenden Ansprüche, **dadurch gekennzeichnet, daß** der gespeicherte Einstellwert die Vorgabe eines Bussystems (102, 108, 114, 120) zur Eingabe von Druckdaten für ein zu druckendes Bild,
und/oder die Vorgabe einer Druckersprache (104, 110, 116, 122),
und/oder die Vorgabe der Bildauflösung (106, 112, 118, 124) des zu druckenden Bildes betreffen.

6. Verfahren nach einem der vorhergehenden Ansprüche, **dadurch gekennzeichnet, daß** das gerätespezifische Programm die Gerätesteuerung (16) steuert,
daß der gespeicherte Einstellwert (102 bis 124) beim Betrieb einer weiteren Gerätesteuerung (12) vorgegeben wird,
und daß die weitere Gerätesteuerung (12) den gespeicherten Einstellwert (102 bis 124) über eine Datenübertragungsverbindung (18, 20) zur ersten Gerätesteuerung (16) überträgt.

7. Verfahren nach Anspruch 6, **dadurch gekennzeichnet, daß** die weitere Gerätesteuerung (12) zum Steuern eines Bedienfeldes eines Druck- oder Kopiergerätes dient, insbesondere eines Hochleistungs-Druckgerätes (10), eines Hochleistungs-Kopiergerätes oder eines Hybridgerätes.

8. Verfahren nach einem der vorhergehenden Ansprüche, **dadurch gekennzeichnet, daß** während des zweiten Ladevorgangs (Ia, Ib, II, III) Programmbausteine in den Hauptspeicher geschrieben werden,
und/oder daß Schnittstellen zur Datenübertragung vorbereitet werden,
und/oder daß Testprogramme zum Testen von Schaltungskomponenten ausgeführt werden,
und/oder daß Prozesse und/oder Unterprozesse zur Ausführung vorbereitet werden.

9. Verfahren nach einem der vorhergehenden Ansprüche, **dadurch gekennzeichnet, daß** nach dem Einschalten der Gerätesteuerung (16) automatisch auf der Anzeigeeinheit mindestens ein aktuell gültiger Einstellwert (102 bis 124) angezeigt wird.

10. Computerprogramm zum Konfigurieren von gerätespezifischen Programmen,
mit einer durch den Prozessor einer Gerätesteuerung (16) ausführbaren Befehlsfolge, **dadurch gekennzeichnet, daß** die Gerätesteuerung (16) beim Ausführen der Befehlsfolge veranlaßt wird, die Verfahrensschritte gemäß einem der Ansprüche 1 bis 9 auszuführen.

11. Datenträger, **dadurch gekennzeichnet, daß** er ein Computerprogramm gemäß Anspruch 10 speichert.

12. Gerätesteuerung eines Druck- oder Kopiergerätes,
die nach dem Einschalten des Druck- oder Kopiergerätes (10) in einem ersten Ladevorgang ein Betriebssystem lädt, und die danach mindestens ein gerätespezifisches Programm abarbeitet
mit einer Speichereinheit (14), in der mindestens ein Einstellwert (102 bis 124) für einen nach dem ersten Ladevorgang auszuführenden zweiten Ladevorgang (Ia, Ib, II, III) zum Laden des gerätespezifischen Programms als ursprünglicher Einstellwert (102 bis 124) gespeichert ist,
**dadurch gekennzeichnet, dass** die Gerätesteuerung eine Eingabeeinheit (12) zur Eingabe eines geänderten Einstellwertes (102 bis 124) während des ersten Ladevorgangs hat,
dass die Gerätesteuerung geeignet ist, bei einer Änderung des ursprünglichen Einstellwertes (102 bis 124), den zweiten Ladevorgang (Ia, Ib, II, III) nach dem Ausführen des ersten Ladevorgangs automatisch zu starten, bei welchem zweiten Ladevorgang die Gerätesteuerung (16) das gerätespezifische Programm unter der Verwendung des geänderten Einstellwertes (102 bis 124) lädt, und
dass die Gerätesteuerung geeignet ist, wenn keine Änderung des ursprünglichen Einstellwertes (102 bis 124) erfolgt ist, den zweiten Ladevorgang (Ia, Ib) nach dem Ausführen des ersten Ladevorgangs automatisch zu starten, bei welchem zweiten Ladevorgang die Gerätesteuerung (16) das gerätespezifische Programm unter Verwendung des ursprünglichen Einstellwertes (102 bis 124) lädt.

13. Gerätesteuerung nach Anspruch 12, **dadurch gekennzeichnet, daß** sie zur Steuerung eines Hochleistungs-Druckgerätes (10), eines Hochleistungs-Kopiergerätes oder eines Hybridgerätes verwendet wird.

14. Druck- oder Kopiergerät (10), insbesondere Hochleistungs-Drucker, **gekennzeichnet durch** eine Gerätesteuerung (16) gemäß Anspruch 12 oder 13.

## Claims

1. A method for the configuration of device-specific programs in a printer or copier device, wherein
in the method, after the printer or copier device (10) is turned on, an operating system is loaded by a device controller (16) of the printer or copier device (10) in a first loading operation, and wherein
in the method, at least one device-specific program is executed with the aid of the device controller (16) of the printer or copier device,
wherein at least one setting value (102 to 124) for a second loading operation (Ia, Ib, II, III) for loading the device-specific program in a memory area of the device controller (16), which second loading operation is to be implemented after the termination of the first loading operation, is stored as original setting value (102 to 124),
**characterized in that** during the implementation of the first loading operation, the stored setting value (102 to 124) is automatically output on a display unit of the printer or copier device (10),
**in that** the output setting value (102 to 124) can be modified with the aid of an input unit of the printer or copier device (10),
**in that**, given a change of the output setting value (102 to 124), the modified setting value (102 to 124) for the second loading operation (Ia, Ib, II, III) is stored,
**in that**, in the second loading operation (II, III), the device-specific program is loaded using the modified setting value (102 to 124) when the original setting value (102 to 124) has been modified,
and **in that**, in the second loading operation (Ia, Ib), the device-specific program is loaded using the original setting value (102 to 124) when the original setting value has not been modified.

2. The method according to claim 1, **characterized in that** the second loading operation (Ia, Ib) for loading the device-specific program is automatically started while the stored setting value (104, 110, 116, 122) can still be modified.

3. The method according to claim 2, **characterized in that** a second loading operation (Ia, Ib) already started with the original setting value (102 to 124) is ended without interruption or is interrupted when the modified setting value (102 to 124) is stored only after the beginning of the second loading operation (Ia, Ib),
and **in that** the second loading operation (II, III) is automatically restarted with the modified setting value (102 to 124).

4. The method according to one of the preceding claims, **characterized in that** the device-specific program contains commands for the control of a printer or copier device (10), in particular a high-performance printer device or a high-performance copier device.

5. The method according to one of the preceding claims, **characterized in that** the stored setting value relates to the predetermination of a bus system (102, 108, 114, 120) for the input of print data for an image to be printed,
and/or the predetermination of a printer language (104, 110, 116, 122),
and/or the predetermination of the image resolution (106, 112, 118, 124) of the image to be printed.

6. The method according to one of the preceding claims, **characterized in that** the device-specific program controls the device controller (16),
**in that** the stored setting value (102 to 124) is predetermined given the operation of a further device controller (12),
and **in that** the further device controller (12) transmits the stored setting value (102 to 124) via a data transmission connection (18, 20) to the first device controller (16).

7. The method according to claim 6, **characterized in that** the further device controller (12) serves for the control of a control panel of a printer or copier device, in particular a high-performance printer device (10), a high-performance copier device or a hybrid device.

8. The method according to one of the preceding claims, **characterized in that** during the second loading operation (Ia, Ib, II, III) program modules are written into the main memory,
and/or that interfaces are prepared for the data transmission,
and/or that test programs for testing circuit components are implemented,
and/or that processes and/or sub-processes are prepared for execution.

9. The method according to one of the preceding claims, **characterized in that**, after the device controller is turned on, at least one currently valid setting value (102 to 124) is automatically displayed on the display unit.

10. Computer program for the configuration of device-specific programs,
comprising a command sequence that can be implemented by the processor of a device controller (16) **characterized in that** the device controller (16) is initiated upon execution of the command sequence to implement the method steps according to one of the claims 1 to 9.

11. A data carrier **characterized in that** it stores a computer program according to claim 10.

12. A device controller of a printer or copier device,
which, after the printer or copier device (10) is turned on, loads an operating system in a first loading operation and, afterwards, executes at least one device-specific program,
with a storage unit (14) in which at least one setting value (102 to 124) for a second loading operation (Ia, Ib, II, III) for loading the device-specific program, which second loading operation is to be implemented after the first loading operation, is stored as original setting value,
**characterized in that** the device controller has an input unit (12) for the input of a modified setting value (102 to 124) during the first loading operation,
**in that** the device controller is suited to automatically start the second loading operation (Ia, Ib, II, III) after execution of the first loading operation given a modification of the original setting value (102 to 124), in which second loading operation the device controller (16) loads the device-specific program using the modified setting value (102 to 124), and
**in that** the device controller is suited to automatically start the second loading operation (Ia, Ib) after execution of the first loading operation if the original setting value (102 to 124) is not modified, in which second loading operation the device controller (16) loads the device-specific program using the original setting value (102 to 124).

13. The device controller according to claim 12, **characterized in that** it is used for the control of a high-performance printer device (10), a high-performance copier device or a hybrid device.

14. A printer or copier device (10), in particular a high-performance printer, **characterized by** a device controller (16) according to claim 12 or 13.

## Revendications

1. Procédé de configuration de programmes dédiés dans un appareil d'impression ou de copie,
dans le procédé, après mise en route de l'appareil d'impression ou de copie (10), un système d'exploitation étant chargé par une commande d'appareil (16) de l'appareil d'impression ou de copie (10) dans un premier processus de chargement,
dans le procédé, au moins un programme dédié étant exécuté à l'aide de la commande d'appareil (16) de l'appareil d'impression ou de copie (10),
au moins une valeur de réglage (102 à 104) destinée à un second processus de chargement (Ia, Ib, II, III), qui doit être exécuté une fois que le premier processus de chargement est terminé et qui est destiné au chargement du programme dédié, est mémorisée dans une zone mémoire de la commande d'appareil (16) en tant que valeur de réglage d'origine (102 à 124),
**caractérisé en ce que**, pendant l'exécution du premier processus de chargement, la valeur de réglage mémorisée (102 à 124) est automatiquement affichée sur une unité de présentation de l'appareil d'impression ou de copie (10),
**en ce que** la valeur de réglage affichée (102 à 124) peut être modifiée à l'aide d'une unité d'entrée de l'appareil d'impression ou de copie (10),
**en ce que**, lorsque la valeur de réglage affichée (102 à 124) est modifiée, la valeur de réglage modifiée (102 à 124) destinée au second processus de chargement (Ia, Ib, II, III) est mémorisée,
**en ce que**, lors du second processus de chargement (II, III), le programme dédié est chargé en utilisant la valeur de réglage modifiée (102 à 124) si une modification de la valeur de réglage d'origine (102 à 124) est effectuée,
et **en ce que**, lors du second processus de chargement (Ia, Ib), le programme dédié est chargé en utilisant la valeur de réglage d'origine (102 à 124) si aucune modification de la valeur de réglage d'origine n'est effectuée.

2. Procédé selon la revendication 1, **caractérisé en ce que** le second processus de chargement (Ia, Ib) pour le chargement du programme dédié est démarré automatiquement tandis que la valeur de réglage mémorisée (104, 110, 116, 122) peut encore être modifiée.

3. Procédé selon la revendication 2, **caractérisé en ce qu'**un second processus de chargement (Ia, Ib), déjà commencé avec la valeur de réglage d'origine (102 à 124), est interrompu ou terminé sans interruption si la valeur de réglage modifiée (102 à 104) n'est mémorisée qu'après le début du second processus de chargement (Ia, Ib).

4. Procédé selon l'une des revendications précédentes, **caractérisé en ce que** le programme dédié contient des instructions pour commander un appareil d'impression ou de copie (10), notamment un appareil d'impression à haute performance ou un appareil de copie à haute performance.

5. Procédé selon l'une des revendications précédentes, **caractérisé en ce que** la valeur de réglage mémorisée satisfait à la consigne d'un système de bus (102, 108, 114, 120) pour l'entrée de données d'impression pour une image à imprimer,
et/ou la consigne d'un langage d'imprimante (104, 110, 116, 122),
et/ou la consigne de la résolution d'image (106, 112, 118, 124) de l'image à imprimer.

6. Procédé selon l'une des revendications précédentes, **caractérisé en ce que** le programme dédié commande la commande d'appareil (16),
**en ce que** la valeur de réglage mémorisée (102 à 124) est prescrite lors de l'utilisation d'une autre commande d'appareil (12),
et **en ce que** l'autre commande d'appareil (12) transmet la valeur de réglage mémorisée (102 à 124) à la première commande d'appareil (16) par une liaison de transmission de données.

7. Procédé selon la revendication 6, **caractérisé en ce que** l'autre commande d'appareil (12) sert à commander un panneau de commande d'un appareil d'impression ou de copie, notamment d'un appareil d'impression à haute performance (10), d'un appareil de copie à haute performance ou d'un appareil hybride.

8. Procédé selon l'une des revendications précédentes, **caractérisé en ce que**, pendant le second processus de chargement (Ia, Ib, II, III), des modules de programme sont écrits dans la mémoire principale,
et/ou **en ce que** des interfaces sont préparées pour la transmission de données,
et/ou **en ce que** des programmes de test sont exécutés pour tester des composants de circuit,
et/ou **en ce que** des processus et/ou des sous-processus sont préparés pour l'exécution.

9. Procédé selon l'une des revendications précédentes, **caractérisé en ce que**, après la mise en route de la commande d'appareil (16), au moins une valeur de réglage actuellement valide (102 à 124) est automatiquement affichée sur l'unité de présentation.

10. Programme informatique destiné à configurer des programmes dédiés, ledit programme informatique comprenant une suite d'instructions exécutables par le processeur d'une commande d'appareil (16), **caractérisé en ce qu'**il est ordonné à la commande d'appareil (16), lors de l'exécution de la suite d'instructions, de mettre en oeuvre les étapes de procédé selon l'une des revendications 1 à 9.

11. Support de données, **caractérisé en ce qu'**il mémorise un programme informatique selon la revendication 10.

12. Commande d'appareil d'un appareil d'impression ou de copie (10) qui, après la mise en route de l'appareil d'impression ou de copie (10), charge un système d'exploitation dans un premier processus de chargement, et exécute ensuite au moins un programme dédié,
ladite commande d'appareil comprenant une unité de mémoire (14) dans laquelle au moins une valeur de réglage (102 à 124), qui est destinée à un second processus de chargement, qui doit être exécuté après le premier processus de chargement et qui est destiné au chargement du programme dédié, est mémorisée en tant que valeur de réglage d'origine (102 à 124),
**caractérisée en ce que** la commande d'appareil possède une unité d'entrée (12) destinée à entrer une valeur de réglage modifiée (102 à 124) pendant le premier processus de chargement,
**en ce que** la commande d'appareil est appropriée à démarrer automatiquement, lorsqu'une valeur de réglage d'origine (102 à 124) est modifiée, le second processus de chargement (Ia, Ib, II, III) après l'exécution du premier processus de chargement, second processus de changement dans lequel la commande d'appareil (16) charge le programme dédié en utilisant la valeur de réglage modifiée (102 à 124), et
**en ce que**, si aucune modification de la valeur de réglage d'origine (102 à 124) n'est effectuée, la commande d'appareil est appropriée à démarrer automatiquement le second processus de chargement (Ia, Ib) après l'exécution du premier processus de chargement, second processus de changement dans lequel la commande d'appareil (16) charge le programme dédié en utilisant la valeur de réglage d'origine (102 à 124).

13. Commande d'appareil selon la revendication 12, **caractérisé en ce qu'**elle est utilisée pour commander un appareil d'impression à haute performance (10), un appareil de copie à haute performance ou un appareil hybride.

14. Appareil d'impression ou de copie (10), notamment un appareil d'impression à haute performance, **caractérisé par** une commande d'appareil (16) selon la revendication 12 ou 13.
